# EUROPÄISCHE PATENTSCHRIFT

(11) **EP 3 103 190 B1**
(45) Veröffentlichungstag und Bekanntmachung des Hinweises auf die Patenterteilung: **10.04.2019**
(21) Anmeldenummer: 15701519.9
(22) Anmeldetag: 23.01.2015
(51) Int. Cl.: H02P 6/00

(54) **VERFAHREN ZUM KALIBRIEREN EINER ELEKTRISCHEN MASCHINE**
METHOD FOR CALIBRATING AN ELECTRIC MACHINE
PROCÉDÉ D'ÉTALONNAGE D'UN MOTEUR ÉLECTRIQUE

(30) Priorität: 03.02.2014 DE 102014201855
(43) Veröffentlichungstag der Anmeldung: 14.12.2016
(73) Patentinhaber: Robert Bosch GmbH, 70442 Stuttgart (DE); SEG Automotive Germany GmbH, 70499 Stuttgart (DE)
(72) Erfinder: MOTAGANAHALLI SRINIVASAMURTHY, Arunkumar, Bangalore 560072 (IN); LELLE, Gunther, 70825 Korntal-Muenchingen (DE)
(86) Internationale Anmeldenummer: PCT/EP2015/051345
(87) Internationale Veröffentlichungsnummer: WO 2015/113904

(56) Entgegenhaltungen:
- US-A1- 2006 025 951

## Beschreibung

Die vorliegende Erfindung betrifft ein Verfahren zum Kalibrieren einer elektrischen Maschine für ein Kraftfahrzeug und eine elektrische Maschine für ein Kraftfahrzeug.

Die Druckschrift US 2006/025951 beschreibt beispielsweise ein System zum Kalibrieren eines Positionssensors in einer elektrischen Maschine, das einen Positionswinkel eines Rotors in Bezug auf einen Stator bereitstellt. Allerdings ist es mit dem System nicht möglich, eine Drehrichtung der elektrischen Maschine zu berücksichtigen.

Es ist die der Erfindung zugrundeliegende Aufgabe, ein Verfahren anzugeben, das eine Ansteuerung einer elektrischen Maschine unabhängig von der Einbaurichtung der elektrischen Maschine oder einer Einbaurichtung eines Rotorpositionssensors erlaubt.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Verfahren zum Kalibrieren einer elektrischen Maschine für ein Kraftfahrzeug gelöst, mit den Schritten eines Erfassens einer Drehrichtung eines Rotors der elektrischen Maschine mittels eines Rotorpositionssensors; eines Korrigierens eines Drehwinkels des Rotorpositionssensors in Abhängigkeit der erfassten Drehrichtung; und eines Ansteuerns der elektrischen Maschine in Abhängigkeit des korrigierten Drehwinkels. Dadurch wird beispielsweise der technische Vorteil erreicht, dass die elektrische Maschine in jeder Lage eingebaut werden kann, ohne einen Steueralgorithmus zu verändern.

In einer vorteilhaften Ausführungsform des Verfahrens umfasst das Verfahren den Schritt eines Antreibens der elektrischen Maschine in einer vorgegebenen Drehrichtung. Dadurch wird beispielsweise der technische Vorteil erreicht, dass die elektrische Maschine auf einfache Weise kalibriert werden kann.

In einer weiteren vorteilhaften Ausführungsform des Verfahrens umfasst der Schritt des Antreibens der elektrischen Maschine ein sequentielles Bestromen der einzelnen Phasen der elektrischen Maschine. Dadurch wird beispielsweise der technische Vorteil erreicht, dass die einzelnen Phasen der elektrischen Maschine einzeln angesteuert werden.

In einer weiteren vorteilhaften Ausführungsform des Verfahrens umfasst das Verfahren den Schritt eines Berechnens eines Drehwinkels während einem Antreiben der elektrischen Maschine. Dadurch wird beispielsweise der technische Vorteil erreicht, dass die Kalibrierung auf Grundlage eines exakten Drehwinkels durchgeführt werden kann.

In einer weiteren vorteilhaften Ausführungsform des Verfahrens umfasst das Verfahren den Schritt eines Berechnens einer Rotorgeschwindigkeit aus dem berechneten Drehwinkel. Dadurch wird beispielsweise der technische Vorteil erreicht, dass die Kalibrierung auf Grundlage einer exakten Drehgeschwindigkeit durchgeführt werden kann.

In einer weiteren vorteilhaften Ausführungsform des Verfahrens wird der Schritt des Erfassens der Drehrichtung des Rotors auf Basis des Vorzeichens der berechneten Rotorgeschwindigkeit durchgeführt. Dadurch wird beispielsweise der technische Vorteil erreicht, dass die Drehrichtung zuverlässig erfasst werden kann.

In einer weiteren vorteilhaften Ausführungsform des Verfahrens umfasst das Verfahren den Schritt eines Speicherns von Drehrichtungsdaten des Rotors in einem insbesondere nichtflüchtigen Datenspeicher. Dadurch wird beispielsweise der technische Vorteil erreicht, dass eine Ansteuerung auch nach einem erneuten Einschalten der elektrischen Maschine die Drehrichtungsdaten zur Kalibrierung verwenden kann.

In einer weiteren vorteilhaften Ausführungsform des Verfahrens umfasst der Datenspeicher eine binäre Speicherzelle zum Speichern von Drehrichtungsdaten des Rotors. Dadurch wird beispielsweise der technische Vorteil erreicht, dass der Speicherbedarf reduziert wird.

In einer weiteren vorteilhaften Ausführungsform des Verfahrens umfasst das Verfahren den Schritt eines Korrigierens der Rotorgeschwindigkeit in Abhängigkeit der erfassten

Drehrichtung. Dadurch wird beispielsweise der technische Vorteil erreicht, dass zusätzlich zu dem Drehwinkel auch die Rotorgeschwindigkeit korrigiert wird.

Gemäß einem zweiten Aspekt der Erfindung wird die Aufgabe durch eine elektrische Maschine für ein Kraftfahrzeug gelöst, mit einem Rotorpositionssensor zum Erfassen eines Drehwinkels eines Rotors der elektrischen Maschine; einem insbesondere nicht-flüchtigen Datenspeicher zum Speichern von Drehrichtungsdaten des Rotors der elektrischen Maschine; und einer Korrigiereinrichtung zum Korrigieren des erfassten Drehwinkels des Rotors auf Basis der gespeicherten Drehrichtungsdaten. Dadurch wird beispielsweise ebenfalls der technische Vorteil erreicht, dass die elektrische Maschine in jeder Lage eingebaut werden kann, ohne einen Steueralgorithmus zu verändern.

Ausführungsbeispiele der Erfindung sind in den Zeichnungen dargestellt und werden im Folgenden näher beschrieben.

Es zeigen:
- Fig. 1: eine schematische Ansicht eines Rotorpositionssensors;
- Fig. 2A: eine schematische Ansicht einer rechtsdrehenden elektrischen Maschine;
- Fig. 2B: eine schematische Ansicht einer linksdrehenden elektrischen Maschine;
- Fig. 3: ein Blockdiagramm einer Rotorpositionskalibrierung;
- Fig. 4A: ein Zeitablaufdiagramm einer Kalibrierung einer rechtsdrehenden elektrischen Maschine mit einer positiven Abtastrichtung eines Rotorpositionssensors;
- Fig. 4B: ein Zeitablaufdiagramm einer Kalibrierung einer rechtsdrehenden elektrischen Maschine mit einer negativen Abtastrichtung eines Rotorpositionssensors;
- Fig. 5A: ein Zeitablaufdiagramm einer Kalibrierung einer linksdrehenden elektrischen Maschine mit einer positiven Abtastrichtung eines Rotorpositionssensors;
- Fig. 5B: ein Zeitablaufdiagramm einer Kalibrierung einer linksdrehenden elektrischen Maschine mit einer negativen Abtastrichtung eines Rotorpositionssensors; und
- Fig. 6: ein Blockdiagramm des Verfahrens.

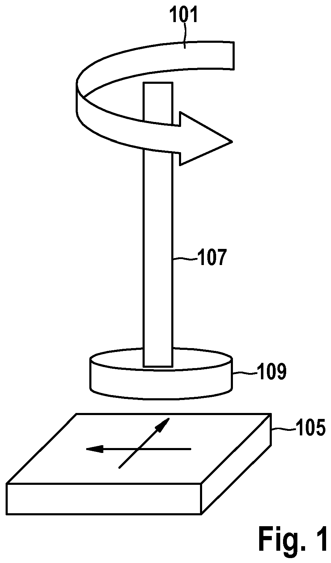

Fig. 1 zeigt eine schematische Ansicht eines Rotorpositionssensors 105. Der Rotorpositionssensor 105 wird dazu verwendet, eine Position (einen Drehwinkel) eines Rotors einer elektrischen Maschine zu erfassen. Der Rotorpositionswinkel des Rotors wird beispielsweise dazu verwendet, ein Drehmoment, eine Geschwindigkeit, eine Spannung oder einen Strom der elektrischen Maschine zu steuern.

Die elektrische Maschine ist beispielsweise als Boost-Rekuperationsmaschine (BRM) ein Teil eines Boost-Rekuperationssystems (BRS) eines Kraftfahrzeugs, das beim Starten des Motors, beim Beschleunigen des Motors (Drehmoment, Geschwindigkeit), beim Wiedergewinnen (Rekuperieren) von Energie während einem Bremsen (Drehmoment), beim Bereitstellen von Energie (Spannung, Strom) oder beim Auslaufen (Geschwindigkeit) durch ein Abtasten der Position oder des Drehwinkels des Rotors verwendet wird.

Die Boost-Rekuperationsmaschine kann direkt mit dem Motor oder mit einem Antriebsstrang hinter dem Getriebe gekoppelt sein. Daher sollte die Boost-Rekuperationsmaschine je nach Kopplung in der Lage sein, ein rechtsdrehendes oder linksdrehendes Boost-Rekuperationssystem zu unterstützen. Darüber hinaus sollte es möglich sein, die Boost-Rekuperationsmaschine in jeder Drehrichtung mit dem Boost-Rekuperationssystem zu koppeln.

Hinsichtlich eines Steueralgorithmus für eine Ansteuerung der elektrischen Maschine sollte die Drehrichtung jedoch gleich bleiben. Dies ist jedoch nur dann möglich, wenn beide Drehrichtungen einheitlich gehandhabt werden können. Dies bedeutet, dass der Rotorpositionssensor 105 stets einen Rotorpositionswinkel mit positiver Steigung oder positiver Geschwindigkeit liefern sollte, wenn sich der Elektromotor in der vorgesehenen Richtung dreht. Eine Abhängigkeit des Rotorpositionswinkels von der Montagerichtung des Rotorpositionssensors 105 (Aufwärtsmontage oder Abwärtsmontage) sollte ebenfalls nicht gegeben sein. Der Rotorpositionswinkel ist die berechnete Rotorwinkelinformation basierend auf dem Rotorpositionssensor 105. Eine Rotorgeschwindigkeit sind die berechneten Rotorgeschwindigkeitsdaten basierend auf dem Rotorpositionswinkel.

Daher sollte ein Verfahren zum Kalibrieren eines Rotorpositionssensors für einen rechtsdrehenden und einen linksdrehenden Elektromotor derart definiert werden, so dass der Rotorpositionswinkel unabhängig von der bevorzugten Drehrichtung des Elektromotors und der Montagerichtung des Rotorpositionssensors 105 ist.

Der Rotorpositionssensor 105 ist auf einer elektronischen Steuereinheit (ECU - Electronic Control Unit) angeordnet. Ein Stab 107, an dessen Spitze ein kreisförmiger Magnet 109 angeordnet ist, ist mit dem Rotor der elektrischen Maschine verbunden. Durch die Verbindung mit der elektrischen Maschine dreht sich der Stab 107 in einer Drehrichtung 101 um seine Längsachse.

Die elektronische Steuereinheit ist derart angeordnet, dass der kreisförmige Magnet 109 des Stabes 107 sich in der Nähe zum dem Rotorpositionssensor 105 befindet. Der Rotorpositionssensor 105 erfasst eine Drehung basierend auf der Magnetfeldinformation des drehbaren kreisförmigen Magnets 109. Der Rotorpositionssensor 105 kann ein beliebiger Rotorpositionssensor 105 sein, beispielsweise basierend auf einem anisotropen magnetoresistiven Effekt (AMR), einem Riesenmagnetowiderstand (GMR) oder einem magnetischen Tunnelwiderstand (TMR).

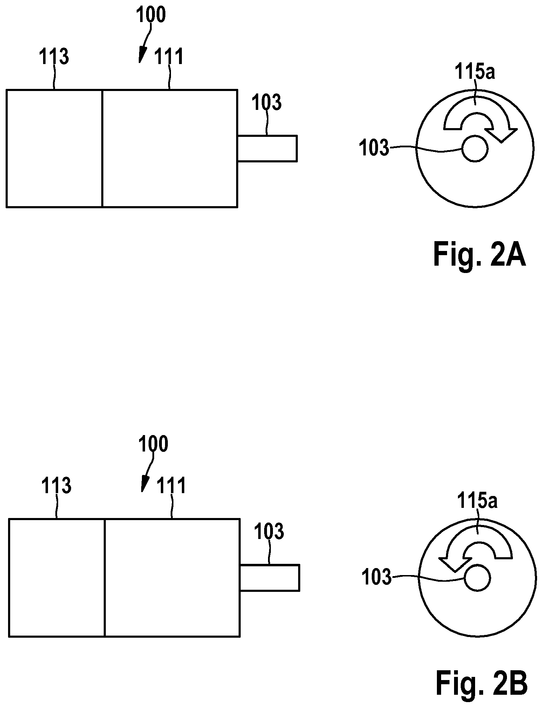

Fig. 2A zeigt eine schematische Ansicht einer rechtsdrehenden elektrischen Maschine 100. Die elektrische Maschine 100 umfasst einen Elektromotor 111 mit dem Rotor 103 und eine elektronischen Steuereinheit 113 zum Steuern des Elektromotors 111. Falls eine bevorzugte Drehrichtung 115a der elektrischen Maschine 100 im Uhrzeigersinn ist, wird die elektrische Maschine 100 eine rechtsdrehende elektrische Maschine genannt. Ein Elektromotor, dessen bevorzugte Drehrichtung für eine Vorwärtsdrehung rechtsherum ist, ist eine rechtsdrehende Maschine.

Fig. 2B zeigt eine schematische Ansicht einer linksdrehenden elektrischen Maschine 100. Falls eine bevorzugte Drehrichtung 115b der elektrischen Maschine 100 entgegen dem Uhrzeigersinn ist, wird die elektrische Maschine 100 eine rechtsdrehende elektrische Maschine 100. Ein Elektromotor, dessen bevorzugte Drehrichtung für eine Vorwärtsdrehung linksherum ist, ist eine linksdrehende Maschine.

Falls der Rotorpositionssensor 105 nicht für die Drehrichtung der rechtsdrehenden oder linksdrehenden elektrischen Maschine 100 kalibriert ist, kann der erfasste Rotorpositionswinkel des Rotorpositionssensors 105 fehlerhaft sein. Dies kann zu einem Fehler beim Starten eines Motors und einem Fehler beim Steuern eines Drehmoments, einer Geschwindigkeit, einer Spannung oder einem Strom der elektrischen Maschine 100 führen. Falls die bevorzugte Richtung der elektrischen Maschine 100 nicht mit der Montagerichtung des Rotorpositionssensors 105 übereinstimmt, kann der berechnete Rotorpositionswinkel ebenfalls fälschlicherweise einen Wert von 360° abzüglich des berechneten Rotorpositionswinkels aufweisen.

Dieser fehlerhaft berechnete Wert führt zu einer fehlerhaften Rotorpositionseingabe in den Steueralgorithmus. Da jedoch die Rotorpositionseingabe eine Grundlage für den Steueralgorithmus ist, beispielsweise bei einer Vektorregelung, Steuerung oder Blockkommutierung, können hierdurch Überströme oder eine fehlerhafte Steuerung des Drehmoments, der Geschwindigkeit, einer Spannung oder eines Stromes entstehen.

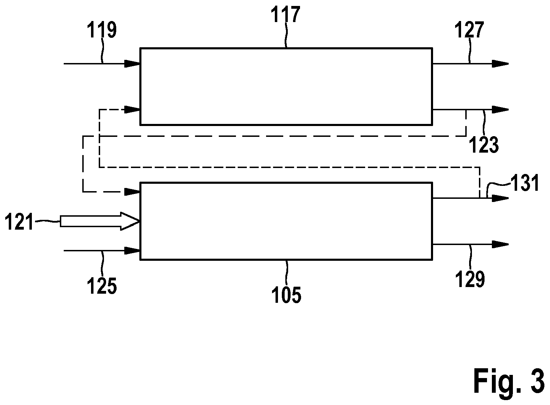

Fig. 3 zeigt ein Blockdiagramm einer Rotorpositionskalibrierung 117. Eine Kalibrierung des Rotorpositionssensors 105 kann bei der Herstellung des Rotorpositionssensors 105 durchgeführt werden. Dabei können die folgenden Schritte zum Kalibrieren des Rotorpositionssensors 105 durchgeführt werden:
Schritt 1: Bei der Rotorpositionskalibrierung 117 wird eine Kalibrierungsstartanfrage 119 für einen Diagnosestart basierend auf einer rechtsdrehenden oder linksdrehenden elektrischen Maschine 100 durchgeführt. Eine getrennte Kalibrierungsstartanfrage 119 für jeweils eine rechtsdrehende oder linksdrehende elektrische Maschine 100 oder eine einzige Kalibrierungsstartanfrage 119 mit zwei unterschiedlichen Interpretationen ist ebenfalls möglich.
Schritt 2: Falls die Kalibrierungsstartanfrage 119 für eine rechtsdrehende elektrische Maschine 100 durchgeführt wird, wird der Elektromotor in Rechtsrichtung für mehrere Drehungen, beispielsweise 10 Umdrehungen, in Schritten eines bestimmten Winkels, beispielsweise in Schritten von 5° oder 10° je 500 ms oder 1000 ms, durch Bestromen der Phasen in der Reihenfolge von U, V, W, X, Y für eine Fünfphasenmaschine oder U, V, W für eine Dreiphasenmaschine angetrieben.
Schritt 3: Falls die Kalibrierungsstartanfrage 119 für eine linksdrehende elektrische Maschine 100 durchgeführt wird, wird der Elektromotor in Linksrichtung für mehrere Drehungen, beispielsweise 10 Umdrehungen, in Schritten eines bestimmten Winkels, beispielsweise in Schritten von 5° oder 10° je 500 ms oder 1000 ms, durch Bestromen der Phasen in der Reihenfolge von U, V, W, X, Y für eine Fünfphasenmaschine oder U, V, W für eine Dreiphasenmaschine angetrieben.
Schritt 4: Während einer Drehung wird unter Verwendung der Positionssensordaten 121 von dem Rotorpositionssensor 105 (Sinus- und Kosinussignal eines AMR- oder GMR-Sensors und Hall-Sensors in einem Boost-Rekuperationssystem) der Rotorpositionswinkel 129 als Funktion von dem Sinussignal, Kosinussignal und dem Hall-Sensor zyklisch berechnet (Rotorpositionswinkel = f1(Sinus, Kosinus, Hall).
Schritt 5: Dann wird unter Verwendung des berechneten Rotorpositionswinkels 129 die Rotorgeschwindigkeit 131 als Funktion des Rotorpositionswinkels 129 berechnet (Rotorgeschwindigkeit = f2(Rotorpositionswinkel).
Schritt 6: Falls am Ende der durchgeführten Drehungen die Rotorgeschwindigkeit 131 positiv ist, erfasst der Rotorpositionssensor 105 den Rotorpositionswinkel 129 gemäß der gewünschten Drehrichtung. Die Positionserfassung durch den Rotorpositionssensor 105 ist in Synchronisation mit der Drehrichtung. Ein Richtungsflag 123 an den nichtflüchtigen Speicher wird gelöscht und beträgt Null. Das Richtungsflag 123 ist beispielsweise eine binäre Speicherzelle.
Schritt 7: Falls am Ende der durchgeführten Drehungen die Rotorgeschwindigkeit 131 negativ ist, erfasst der Rotorpositionssensor 105 den Rotorpositionswinkel 129 entgegengesetzt der gewünschten Drehrichtung. Die Positionserfassung durch den Rotorpositionssensor 105 ist nicht in Synchronisation mit der Drehrichtung. Das Richtungsflag 123 an den nichtflüchtigen Speicher wird gesetzt und beträgt Eins.
Schritt 8: Dann wird das berechnete Richtungsflag 123 in dem nichtflüchtigen Speicher gespeichert, beispielsweise einem nichtflüchtigen RAM (Random Access Memory) oder EEPROM (Electrically Erasable Programmable Read Only Memory).
Schritt 9: Das gespeicherte Richtungsflag 123 an den nichtflüchtigen Speicher wird aus dem nichtflüchtigen Speicher zurückgelesen (Richtungsflag 125 aus dem nichtflüchtigen Speicher) und wird bei der Berechnung des Rotorpositionswinkels 129 verwendet, jedoch nicht während einer Kalibrierung. Das Richtungsflag 125, das aus dem nichtflüchtigen Speicher gelesen wird, beträgt Null, falls die Rotorpositionserfassung in der Richtung der bevorzugten Drehrichtung ist und Eins, falls die Rotorpositionserfassung entgegengesetzt der bevorzugten Drehrichtung ist.
Schritt 10: Falls das Richtungsflag 125 aus dem nichtflüchtigen Speicher Null ist, ist der tatsächliche Rotorpositionswinkel exakt der berechnete Rotorpositionswinkel basierend auf der Funktion f1.
Schritt 11: Falls das Richtungsflag 125 aus dem nichtflüchtigen Speicher Eins ist, ist der tatsächliche Rotorpositionswinkel 360° minus des berechneten Rotorpositionswinkels basierend auf der Funktion f1. Der Tastgrad 127 für die Phasen des Elektromotors wird entsprechend gesteuert.

### Alternativen:

In Schritt 1, Schritt 2 und Schritt 3 wird eine Kalibrierung basierend auf einer bevorzugten Richtung angefordert. Daraufhin wird die Boost-Rekuperationsmaschine in der bevorzugten Richtung angetrieben. Statt dieser Schritte können die folgenden Schritte durchgeführt werden:
Neuer Schritt 1: Die Boost-Rekuperationsmaschine wird in der bevorzugten Richtung durch eine externe Prüfanlage mit Direktkopplung unter Verwendung einer anderen elektrischen Maschine oder internen Verbrennungsmaschine angetrieben. Eine Kalibrierungsstartanfrage 119 wird an die Boost-Rekuperationsmaschine gegeben.
Neuer Schritt 2: Die Kalibrierung fährt mit den oben genannten Schritten 4 bis 11 fort.

Durch die obige Kalibrierungstechnik und die Verwendung des Richtungsflags 125 aus dem nichtflüchtigen Speicher weist der tatsächliche Rotorpositionswinkel 129 stets eine positive Steigung und eine daraus resultierende positive Geschwindigkeit auf, falls die Rotordrehung mit der Maschinendrehrichtung übereinstimmt.

Falls die Rotordrehung entgegengesetzt zu der bevorzugten Maschinendrehrichtung ist, weist der tatsächliche Rotorpositionswinkel 129 eine negative Steigung und eine daraus resultierende negative Geschwindigkeit auf. Daher ist der resultierende Rotordrehwinkel unabhängig von der gewünschten, bevorzugten Maschinendrehrichtung und Montage (positivorientiert, negativorientiert, aufwärts oder abwärts) des Rotorpositionssensors 105.

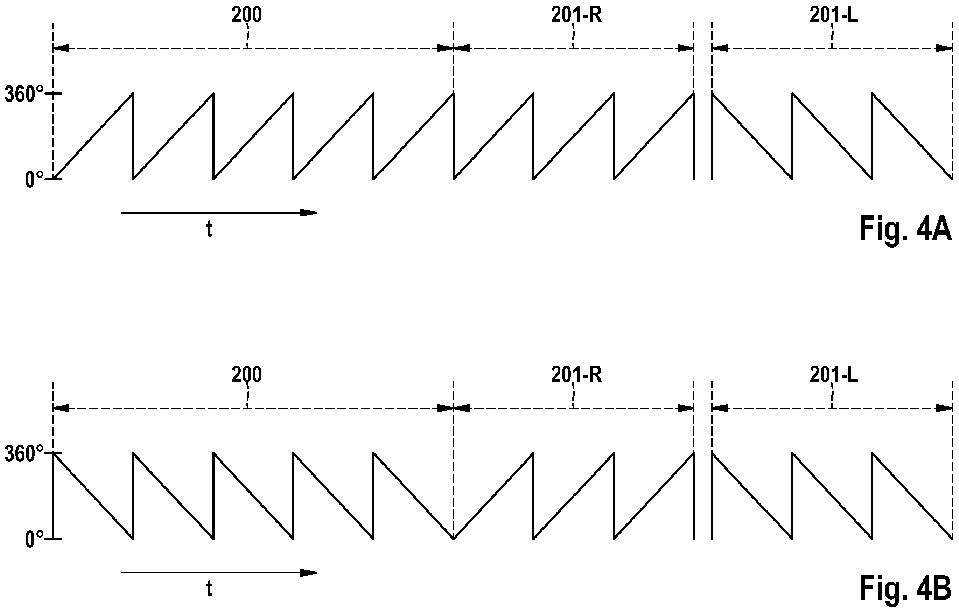

Fig. 4A zeigt ein Zeitablaufdiagramm einer Kalibrierung einer rechtsdrehenden elektrischen Maschine mit einer positiven Abtastrichtung des Rotorpositionssensors 105. Eine Ausgabe des Rotorpositionssensors 105 der rechtsdrehenden Maschine weist nach einem Kalibrierungszeitraum 200 in einen Zeitraum 201-R bei einer Rechtsdrehung in bevorzugter Maschinenrichtung eine positive Steigung und eine positive Geschwindigkeit auf. In einem Zeitraum 201-L bei einer Linksdrehung entgegen der bevorzugten Maschinenrichtung weist die Ausgabe eine negative Steigung und eine negative Geschwindigkeit auf.

Fig. 4B zeigt ein Zeitablaufdiagramm einer Kalibrierung einer rechtsdrehenden elektrischen Maschine mit einer negativen Abtastrichtung des Rotorpositionssensors 105. Nach einem Kalibrierungszeitraum 200 weist die Ausgabe des Rotorpositionssensors 105 in einen Zeitraum 201-R bei einer Rechtsdrehung in bevorzugter Maschinenrichtung ebenfalls eine positive Steigung und eine positive Geschwindigkeit auf. In einem Zeitraum 201-L bei einer Linksdrehung entgegen der bevorzugten Maschinenrichtung weist die Ausgabe ebenfalls eine negative Steigung und eine negative Geschwindigkeit auf.

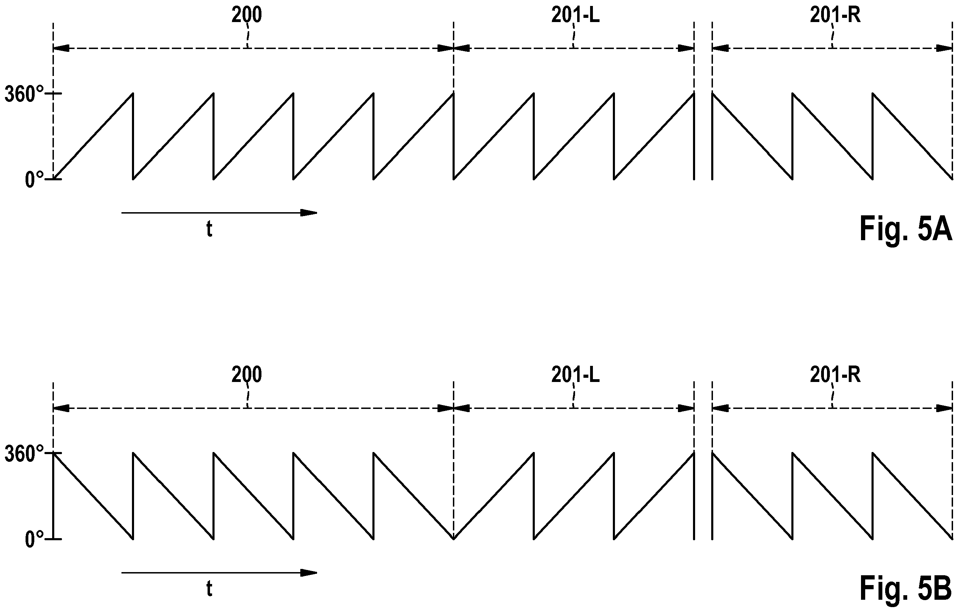

Fig. 5A zeigt ein Zeitablaufdiagramm einer Kalibrierung einer linksdrehenden elektrischen Maschine mit einer positiven Abtastrichtung des Rotorpositionssensors 105. Eine Ausgabe des Rotorpositionssensors 105 der linksdrehenden Maschine weist nach einem Kalibrierungszeitraum 200 in einem Zeitraum 201-L bei einer Linksdrehung in bevorzugter Maschinenrichtung eine positive Steigung und eine positive Geschwindigkeit auf. In einem Zeitraum 201-R bei einer Rechtsdrehung entgegen der bevorzugten Maschinenrichtung weist die Ausgabe eine negative Steigung und eine negative Geschwindigkeit auf.

Fig. 5B zeigt ein Zeitablaufdiagramm einer Kalibrierung einer linksdrehenden elektrischen Maschine mit einer negativen Abtastrichtung des Rotorpositionssensors 105. Nach einem Kalibrierungszeitraum 200 weist die Ausgabe des Rotorpositionssensors 105 in einem Zeitraum 201-L bei einer Linksdrehung in bevorzugter Maschinenrichtung ebenfalls eine positive Steigung und eine positive Geschwindigkeit auf. In einem Zeitraum 201-R bei einer Rechtsdrehung entgegen der bevorzugten Maschinenrichtung weist die Ausgabe ebenfalls eine negative Steigung und eine negative Geschwindigkeit auf.

Aus den Fig. 4A, 4B, 5A und 5B wird ersichtlich, dass ungeachtet der bevorzugten Maschinendrehrichtung und Montagerichtung des Positionserfassungssensors 105 nach einer Kalibrierung das folgende Ergebnis erhalten wird: Falls die Drehung in der bevorzugten Maschinenrichtung ist, ist die Steigung des Rotorpositionswinkels positiv. Falls die Drehung entgegengesetzt der bevorzugten Maschinenrichtung ist, ist die Steigung des Rotorpositionswinkels negativ.

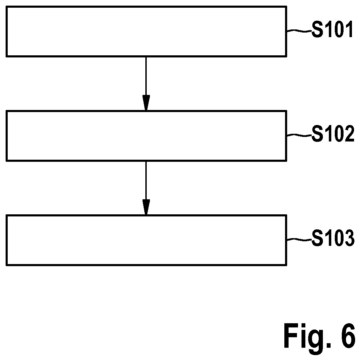

Fig. 6 zeigt ein Blockdiagramm des Verfahrens. In Schritt S101 wird eine Drehrichtung 101 eines Rotors 103 der elektrischen Maschine 100 mittels eines Rotorpositionssensors 105 erfasst. In Schritt S102 wird der Drehwinkels des Rotorpositionssensors 105 in Abhängigkeit der erfassten Drehrichtung 101 korrigiert. In Schritt S103 wird die elektrische Maschine 100 in Abhängigkeit des korrigierten Drehwinkels angesteuert.

Das Verfahren verwendet einen genauen Kalibrierungsmechanismus und ermöglicht, eine Boost-Rekuperationsmaschine in jeder Richtung einzubauen. Dies stellt ein wichtiges Merkmal für eine Hybridtechnologie in einem Kraftfahrzeug dar. Da mit dem Verfahren ein Rotorpositionswinkel unabhängig von der Maschinendrehrichtung und Montagerichtung des Rotorpositionssensors 105 ist, bleiben die Rotorpositionsdaten 121 für einen Steueralgorithmus stets gleich.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Verfahren zum Kalibrieren einer elektrischen Maschine (100) für ein Kraftfahrzeug, **gekennzeichnet durch** die Schritte :
Erfassen (S101) einer Drehrichtung (101) eines Rotors (103) der elektrischen Maschine (100) mittels eines Rotorpositionssensors (105);
Korrigieren (S102) eines Drehwinkels des Rotorpositionssensors (105) in Abhängigkeit der erfassten Drehrichtung (101); und
Ansteuern (S103) der elektrischen Maschine (100) in Abhängigkeit des korrigierten Drehwinkels.

2. Verfahren nach Anspruch 1, wobei das Verfahren den Schritt eines Antreibens der elektrischen Maschine (100) in einer vorgegebenen Drehrichtung (115a, 115b) umfasst.

3. Verfahren nach Anspruch 2, wobei der Schritt des Antreibens der elektrischen Maschine (100) ein sequentielles Bestromen der einzelnen Phasen der elektrischen Maschine (100) umfasst.

4. Verfahren nach einem der Ansprüche 2 oder 3, wobei das Verfahren den Schritt eines Berechnens eines Drehwinkels während einem Antreiben der elektrischen Maschine (100) umfasst.

5. Verfahren nach Anspruch 4, wobei das Verfahren den Schritt eines Berechnens einer Rotorgeschwindigkeit aus dem berechneten Drehwinkel umfasst.

6. Verfahren nach Anspruch 5, wobei der Schritt (S101) des Erfassens der Drehrichtung (101) des Rotors (103) auf Basis des Vorzeichens der berechneten Rotorgeschwindigkeit durchgeführt wird.

7. Verfahren nach einem der vorangehenden Ansprüche, wobei das Verfahren den Schritt eines Speicherns von Drehrichtungsdaten des Rotors in einem Datenspeicher umfasst.

8. Verfahren nach Anspruch 7, wobei der Datenspeicher eine binäre Speicherzelle zum Speichern von Drehrichtungsdaten des Rotors (103) umfasst.

9. Verfahren nach einem der vorangehenden Ansprüche, wobei das Verfahren den Schritt eines Korrigierens der Rotorgeschwindigkeit in Abhängigkeit der erfassten Drehrichtung (101) umfasst.

10. Elektrische Maschine (100) für ein Kraftfahrzeug, mit:
einem Rotorpositionssensor (105) zum Erfassen eines Drehwinkels eines Rotors (103) der elektrischen Maschine (100); **dadurch gekennzeichnet, daß** der Rotorpositionssensor (105) zum Erfassen einer Drehrichtung eines Rotors (103) der elektrischen Maschine (100) ausgeführt ist;
weiter **gekennzeichnet durch** einen Datenspeicher zum Speichern von Drehrichtungsdaten des Rotors (103) der elektrischen Maschine (100); und
eine Korrigiereinrichtung (113) zum Korrigieren des erfassten Drehwinkels des Rotors (103) auf Basis der gespeicherten Drehrichtungsdaten.

## Claims

1. Method for calibrating an electric machine (100) for a motor vehicle, **characterized by** the steps of:
detecting (S101) a direction of rotation (101) of a rotor (103) of the electric machine (100) by means of a rotor position sensor (105);
correcting (S102) an angle of rotation of the rotor position sensor (105) depending on the detected direction of rotation (101); and
actuating (S103) the electric machine (100) depending on the corrected angle of rotation.

2. Method according to Claim 1, wherein the method comprises the step of driving the electric machine (100) in a prescribed direction of rotation (115a, 115b).

3. Method according to Claim 2, wherein the step of driving the electric machine (100) comprises sequentially energizing the individual phases of the electric machine (100) .

4. Method according to either of Claims 2 and 3, wherein the method comprises the step of calculating an angle of rotation during driving of the electric machine (100) .

5. Method according to Claim 4, wherein the method comprises the step of calculating a rotor speed from the calculated angle of rotation.

6. Method according to Claim 5, wherein the step (S101) of detecting the direction of rotation (101) of the rotor (103) is carried out based on the sign of the calculated rotor speed.

7. Method according to one of the preceding claims, wherein the method comprises the step of storing direction of rotation data of the rotor in a data memory.

8. Method according to Claim 7, wherein the data memory comprises a binary memory cell for storing direction of rotation data of the rotor (103).

9. Method according to one of the preceding claims, wherein the method comprises the step of correcting the rotor speed depending on the detected direction of rotation (101).

10. Electric machine (100) for a motor vehicle, having:
a rotor position sensor (105) for detecting an angle of rotation of a rotor (103) of the electric machine (100);
**characterized in that** the rotor position sensor (105) is embodied to detect a direction of rotation of a rotor (103) of the electric machine (100);
further **characterized by** a data memory for storing direction of rotation data of the rotor (103) of the electric machine (100); and
a correction device (113) for correcting the detected angle of rotation of the rotor (103) based on the stored direction of rotation data.

## Revendications

1. Procédé d'étalonnage d'un moteur électrique (100) destiné à un véhicule automobile, **caractérisé par** les étapes consistant à :
détecter (S101) un sens de rotation (101) d'un rotor (103) du moteur électrique (100) au moyen d'un capteur de position du rotor (105) ;
corriger (S102) un angle de rotation du capteur de position du rotor (105) en fonction du sens de rotation (101) détecté ;
activer (S103) le moteur électrique (100) en fonction de l'angle de rotation corrigé.

2. Procédé selon la revendication 1, le procédé comprenant l'étape consistant à propulser le moteur électrique (100) dans un sens de rotation (115a, 115b) prédéfini.

3. Procédé selon la revendication 2, l'étape de la propulsion du moteur électrique (100) comprenant une alimentation électrique séquentielle des phases individuelles du moteur électrique (100).

4. Procédé selon l'une quelconque des revendications 2 ou 3, le procédé comprenant l'étape consistant à calculer un angle de rotation pendant une propulsion du moteur électrique (100).

5. Procédé selon la revendication 4, le procédé comprenant l'étape consistant à calculer une vitesse du rotor à partir de l'angle de rotation calculé.

6. Procédé selon la revendication 5, l'étape (S101) de la détection du sens de rotation (101) du rotor (103) étant réalisée sur la base du signe algébrique de la vitesse du rotor calculée.

7. Procédé selon l'une quelconque des revendications précédentes, le procédé comprenant l'étape consistant à mémoriser des données de sens de rotation du rotor dans une mémoire de données.

8. Procédé selon la revendication 7, la mémoire de données comprenant une cellule de mémoire binaire, destinée à mémoriser des données de sens de rotation du rotor (103).

9. Procédé selon l'une quelconque des revendications précédentes, le procédé comprenant l'étape consistant à corriger la vitesse du rotor en fonction du sens de rotation (101) détecté.

10. Moteur électrique (100) destiné à un véhicule automobile, avec :
un capteur de position du rotor (105), destiné à détecter un angle de rotation d'un rotor (103) du moteur électrique (100) ; **caractérisé en ce que** le capteur de position du rotor (105) est réalisé pour détecter un sens de rotation d'un rotor (103) du moteur électrique (100) ;
**caractérisé par** ailleurs par une mémoire de données, destinée à mémoriser des données de sens de rotation du rotor (103) du moteur électrique (100) ; et
un système de correction (113), destiné à corriger l'angle de rotation détecté du rotor (103) sur la base des données de sens de rotation mémorisées.
